# EUROPÄISCHE PATENTSCHRIFT

(11) **EP 3 315 563 B1**
(45) Veröffentlichungstag und Bekanntmachung des Hinweises auf die Patenterteilung: **29.04.2020**
(21) Anmeldenummer: 16196343.4
(22) Anmeldetag: 28.10.2016
(51) Int. Cl.: C09C 1/62, C09C 3/06, C09D 1/00, C09D 5/08, C01B 33/12, C22C 18/00

(54) **KORROSIONSSCHUTZPIGMENT UND SEINE VERWENDUNG**
CORROSION PROTECTIVE PIGMENTS AND THEIR USE
PIGMENT ANTICORROSION ET SON UTILISATION

(43) Veröffentlichungstag der Anmeldung: 02.05.2018
(73) Patentinhaber: EWALD DÖRKEN AG, 58313 Herdecke (DE)
(72) Erfinder: BATTAGLIA, Carolina, 58097 Hagen (DE); WALTER, Susanne, 58313 Herdecke (DE); GROSSMANN, Verena, 58313 Herdecke (DE); ROTH, Marcel, 40859 Düsseldorf (DE); BÖHM, Sandra, 58256 Ennepetal (DE); REUSMANN, Gerhard, 45259 Essen (DE)
(74) Vertreter: Von Rohr Patentanwälte Partnerschaft mbB

(56) Entgegenhaltungen:
- WO-A1-2016/059033
- BE-A1- 867 050
- DE-A1-102009 028 667
- DE-A1-102010 007 147
- DE-T2- 69 930 601
- FR-A1- 2 648 822
- US-A1- 2002 017 164

## Beschreibung

Die vorliegende Erfindung betrifft das technische Gebiet des Korrosionsschutzes, insbesondere der kathodischen Korrosionsschutzbeschichtungen.

Insbesondere betrifft die vorliegende Erfindung die Verwendung modifizierter Metallpartikel in antikorrosiven Beschichtungszusammensetzungen.

Des Weiteren betrifft die vorliegende Erfindung antikorrosive Beschichtungszusammensetzungen, welche oberflächenmodifizierte Metallpartikel enthalten, sowie die Verwendung der antikorrosiven Beschichtungszusammensetzungen zur Herstellung von Korrosionsschutzbeschichtungen.

Schließlich betrifft die vorliegende Erfindung Korrosionsschutzbeschichtungen, welche mit den zuvor genannten antikorrosiven Beschichtungszusammensetzungen hergestellt wurden bzw. modifizierte Metallpartikel enthalten.

Korrosionserscheinungen in Metallen werden an sämtlichen Metallen und in allen technischen Gebieten beobachtet. Sie sind von großer technischer und wirtschaftlicher Bedeutung, weil die Haltbarkeit bzw. die Einsatzdauer von Maschinen, Fahrzeugen, Industrieanlagen oder auch von Gebäuden oftmals in entscheidendem Maße von den Korrosionseigenschaften der verwendeten Metalle abhängig ist. Korrosion führt dazu, dass Metallteile ersetzt oder instandgesetzt werden müssen, was stets mit Aufwand und Zeit, Material und Kosten verbunden ist.

Gemäß DIN EN ISO 8004 ist Korrosion die physikochemische Wechselwirkung zwischen einem Metall und seiner Umgebung, die zu einer Veränderung der Eigenschaften des Metalls führt und die zu erheblichen Beeinträchtigungen der Funktion des Metalls, der Umgebung oder des technischen Systems, in welchem die Metalle verwendet werden, führen kann. Bei der Korrosion von Metallen handelt es sich in der Regel um elektrochemische Vorgänge, nämlich die Oxidation von Metallen durch Sauerstoff gegebenenfalls in Gegenwart wässriger Elektrolytlösungen unter Ausbildung von Metalloxidschichten.

Da Korrosionsvorgänge die Haltbarkeit bzw. Einsatzzeit von Metallen bzw. Metallbeschichtungen oftmals bestimmen, ist es sinnvoll, die Korrosionsanfälligkeit und Korrosionsgeschwindigkeit der Metalle zu verringern. Um Metalle vor Korrosion zu schützen, werden u. a. passive Systeme, wie beispielsweise Beschichtungen oder Schutzlacke eingesetzt, welche das Metall vor Umwelteinflüssen und somit vor Korrosion schützen sollen.

Einen weitaus besseren Korrosionsschutz bieten jedoch aktive Systeme, insbesondere der sogenannte kathodische Korrosionsschutz, bei welchem das zu schützende Metall als Kathode eingesetzt wird - sei es durch Anlegen einer äußeren Spannung oder durch Kontakt mit einem unedleren Metall, d. h. ein Metall mit einem niedrigeren Standardelektrodenpotential - und somit vor Oxidation geschützt wird.

Die am weitesten verbreitete Form des kathodischen Korrosionsschutzes ist die Beschichtung von Metallteilen mit einem im Vergleich zum zu schützenden Metall unedleren Metall. Aufgrund seines niedrigen Elektrodenpotentials, der guten Verfügbarkeit und der günstigen Beschaffungskosten wird für derartige kathodische Korrosionsschutzbeschichtungen oftmals metallisches Zink verwendet, welches entweder aus der Schmelze im Rahmen der sogenannten Feuerverzinkung oder durch galvanische Abscheidung, die sogenannte galvanische Verzinkung, auf Stahlbleche bzw. Stahlbauteile aufgebracht wird. Nachteilig an Überzügen aus metallischem Zink ist jedoch, dass die Schichten eine relativ hohe Dicke von oftmals über 100 µm aufweisen und sich diese Art der Verzinkung somit nicht für Präzisionsbauteile eignet. Darüber hinaus ist Zink sehr weich und kann daher nur begrenzt zur Beschichtung von Bauteilen, welche erhöhten mechanischen Belastungen ausgesetzt sind, wie beispielsweise Schraubengewinden, eingesetzt werden.

Um diese speziellen Nachteile von feuerverzinkten bzw. galvanisch verzinkten Metallteilen zu vermeiden, wurden sogenannte Zinklamellenüberzüge, auch Zinklamellenprimer genannt, entwickelt, die plättchenförmige Zinkpigmente - die sogenannten Zinklamellen - in einem überwiegend anorganischen Bindemittel enthalten. Die Mischung aus Bindemitteln und Zinklamellen wird in einer dünnen Schicht als Dispersion auf das schützende Metallteil aufgebracht, wobei nach Vernetzen des Bindemittels eine geschlossene homogene Schicht mit einer Stärke von üblicherweise 5 bis 15 µm erhalten wird.

Derartige Zinklamellenüberzüge weisen trotz der Einbettung der Zinkpartikel in die Bindemittelmatrix elektrische Leitfähigkeit auf und gewährleisten so einen hohen kathodischen Schutz bei gleichzeitiger hervorragender mechanischer Belastbarkeit. Insbesondere zeigen Zinklamellenüberzüge im Salzsprühtest am Ritz gemäß DIN EN ISO 9227 gegenüber galvanisch bzw. der elektrolytisch verzinkten Metallteilen eine deutlich verbesserte Korrosionsbeständigkeit auf.

Ein Nachteil von Beschichtungszusammensetzungen, welche Zinkpigmente enthalten, ist jedoch darin zu sehen, dass bei Verwendung wässrig basierter Bindemittelsysteme das elementare Zink der Pigmente sowohl im sauren als auch im basischen Milieu nicht stabil ist und oftmals unter Reduktion von Protonen zu Zinkionen oder Zinkhydroxid bzw. -oxid oxidiert wird. Hierdurch vermindert sich die Korrosionsschutzwirkung der Beschichtungszusammensetzung und der daraus erhaltenen Korrosionsschutzbeschichtungen durch die Bildung von Zinkoxid - dem sogenannten Weißrost. Darüber hinaus führt die hohe Reaktivität des Zinks im wässrigen Milieu oftmals zur Gasbildung sowie zur ungewollten Eindickung der Beschichtungssysteme.

Aus diesen Gründen werden Zinkbeschichtungssysteme mit wässrig basierten Bindemittelsystemen erst kurz vor der Anwendung aus den Edukten bzw. Eduktgemischen hergestellt und die Beschichtungssysteme zusätzlich mit passivierenden Zusätzen versetzt, welche jedoch oftmals toxikologisch oder unter Gesichtspunkten des Umweltschutzes problematisch sind.

Um die ungewollte Oxidation der Zink- bzw. Zinklegierungspartikel zu verhindern oder zumindest zu verringern, wird das Zink oftmals mit einer Beschichtung versehen. Als Beschichtungsreagenz wird für diese Zwecke üblicherweise Stearinsäure verwendet, welche Zinkpigmente zwar besser vor Oxidation schützt, jedoch eine Dispergierung in den hydrophilen wässrig basierten Bindemittelsystemen deutlich erschwert. Darüber hinaus sind die mit Stearinsäure beschichteten Zinkpigmente immer noch derart instabil im wässrigen System, dass die Beschichtungssysteme gleichfalls mit Stabilisierungsadditiven bzw. passivierenden Additiven versehen werden müssen, welche jedoch oftmals toxikologisch bedenklich oder unter Gesichtspunkten den Umweltschutzes zu vermeiden sind.

Die DE 10 2013 113 885 A1 betrifft beschichtete Metallpigmente, welche eine erste das Metallpigment umhüllende Beschichtungsschicht, welche mindestens ein Metalloxid aufweist, und mindestens eine zweite Beschichtungsschicht, welche mindestens ein Heteropolysiloxan aufweist, aufweisen. Die offenbarten Metallpigmente sind zwar gegenüber Oxidation und Korrosion in wässrigem Milieu geschützt, weisen jedoch in Beschichtungen keinen kathodischen Korrosionsschutz mehr auf.

Auch die DE 10 2013 015 980 A1 beschreibt modifizierte Metalleffektpigmente, welche eine mehrschichtige Beschichtung, bestehend aus einer Metalloxidschicht und einer darauf aufgebrachten Silanschicht, aufweisen. Auch diese Metallpigmente weisen keinerlei kathodischen Korrosionsschutz mehr auf.

Weiterhin beschreibt die WO 2016/059033 A1 Pulver aus beschichtetem PVD-Metalleffektpigment, hochkonzentrierte Aufschlämmungen von beschichtetem PVD-Metalleffektpigment sowie deren Verwendung in Pulverlacken und Masterbatches. Das Pulver aus beschichteten PVD-Metalleffektpigmenten zeichnet sich durch eine sehr gute Redispergierbarkeit aus und ist insbesondere zur Herstellung hochkonzentrierter Aufschlämmungen hervorragend geeignet. Es ist ferner sehr gut rieselfähig, im Wesentlichem agglomeratfrei und führt zu Beschichtungen mit hervorragendem Metallglanz.

Darüber hinaus beschreibt die DE 10 2010 007 147 A1 ein Verfahren zum Beschichten von Metalleffektpigmenten mit Silicumoxid, wobei Alkoxysilan(e) und/oder Siliciumhalogenid(e) in organischem Lösemittel mit Wasser in Gegenwart von Metalleffektpigmenten umgesetzt werden, wobei die Umsetzung wenigstens zwei Schritte umfasst, wobei (a) die Umsetzung in einem ersten Schritt unter Zugabe von Säure und in einem zweiten Schritt unter Zugabe von Base durchgeführt wird oder wobei (b) die Umsetzung in einem ersten Schritt unter Zugabe von Base und in einem zweiten Schritt unter Zugabe von Säure durchgeführt wird. Darüber hinaus wird gleichermaßen das Metalleffektpigment als auch dessen Verwendung beschrieben.

Die US 2002/0017164 A1 beschreibt eine chromfreie, korrosionshemmende Beschichtungszusammensetzung, die keine schädlichen Chromverbindungen verwendet und zur Korrosionshemmung einer Metalloberfläche verwendet werden kann, umfassend eine Aufschlämmmischung, in der beschichtetes feines Aluminiumpulver, das mit einem hydrophilen Haftvermittler behandelt ist, in einer sauren Phosphatbinderlösung suspendiert ist. Es wird bevorzugt ein Titanhaftvermittler verwendet, um die Oberfläche des feinen Aluminiumpulvers zu behandeln. In der wässrigen, chromfreien, korrosionshemmenden Beschichtungszusammensetzung sind 25 bis 40 Gew.-% des feinen Aluminiumpulvers, dessen Oberfläche mit dem Haftvermittler behandelt ist, in der sauren Phosphatbinder-Iösung suspendiert.

Schließlich betrifft die DE 699 30 601 T2 Molybdatpigment-enthaltende Pasten auf Basis von inhibierten Metallpigmenten zur Verwendung in wässrigen Beschichtungen. Gemäß der DE 699 30 601 T2 werden Metallpartikel, die sich für Beschichtungszusammensetzungen eignen, mit einem korrosionshindernden Molybdatpigment behandelt. Die Metallpartikel können dabei Aluminium, Zink oder Bronze umfassen. Das Molybdatpigment liegt im Allgemeinen in Form eines anorganischen Molybdat-Salzes vor. Es wird angenommen, dass das Molybdatpigment chemisch mit der Oberfläche der Metallpartikel reagiert, um eine erhöhte Beständigkeit gegen einen wässrigen Angriff bereitzustellen.

Es fehlt somit nach wie vor im Stand der Technik an Metallpigmenten für kathodische Korrosionsschutzbeschichtungen, welche in wässrigem Milieu nicht oder nur in geringem Maße oxidiert werden und gleichzeitig hervorragend in wässrigen Systemen dispergiert werden können. Darüber hinaus stehen derzeit keine Metallpigmente für den kathodischen Korrosionsschutz zur Verfügung, welche langzeitstabil in wässrigen Systemen dispergiert werden können.

Es ist somit eine Aufgabe der vorliegenden Erfindung, die zuvor geschilderten, mit dem Stand der Technik verknüpften Nachteile zu vermeiden, zumindest jedoch abzuschwächen.

Insbesondere ist eine Aufgabe der vorliegenden Erfindung darin zu sehen, Metallpigmente für den kathodischen Korrosionsschutz bereitzustellen, welche im Vergleich zu Metallpigmenten des Standes der Technik eine deutlich längere Stabilität im wässrigem Medium aufweisen und sich leicht durch einfaches Einrühren ohne weitere Maßnahme im wässrigen Medium dispergieren lassen.

Weiterhin ist eine Aufgabe der vorliegenden Erfindung darin zu sehen, Metallpigmente für den kathodischen Korrosionsschutz bereitzustellen, welche in einer Beschichtung einen hohen kathodischen Korrosionsschutz gewähren und gleichzeitig eine sehr gute Weißrostbeständigkeit aufweisen, d. h. unter Korrosionsbelastung deutlich länger eine silberne weißrost-freie Optik beibehalten, insbesondere im neutralen Salzsprühtest nach DIN EN ISO 9227.

Eine weitere Aufgabe der vorliegenden Erfindung ist darin zu sehen, ein Metallpigment für den kathodischen Korrosionsschutz bereitzustellen, welches in wässrigem Milieu nicht oder zumindest deutlich langsamer oxidiert wird.

Eine weitere Aufgabe der vorliegenden Erfindung ist schließlich darin zu sehen, eine insbesondere wässrig basierte antikorrosive Beschichtungszusammensetzung bereitzustellen, welche lagerstabil ist.

Gegenstand der vorliegenden Erfindung gemäß einem ersten Aspekt der vorliegenden Erfindung ist eine antikorrosive Beschichtungszusammensetzung nach Anspruch 1; weitere vorteilhafte Ausgestaltungen dieses Erfindungsaspektes sind Gegenstand der diesbezüglichen Unteransprüche.

Weiterer Gegenstand der vorliegenden Erfindung gemäß einem zweiten Aspekt der vorliegenden Erfindung ist die Verwendung einer antikorrosiven Beschichtungszusammensetzung nach Anspruch 7.

Wiederum weiterer Gegenstand der vorliegenden Erfindung ist eine Korrosionsschutzbeschichtung nach Anspruch 8.

Schließlich ist weiterer Gegenstand der vorliegenden Erfindung die Verwendundung oberflächenmodifizierter Metallpartikel als Korosionsschutzpigmene nach Anspruch 9.

Es versteht sich von selbst, dass Besonderheiten, Merkmale, Ausgestaltungen und Ausführungsformen sowie Vorteile oder dergleichen, welche nachfolgend - zu Zwecken der Vermeidung von unnötigen Wiederholungen - nur zu einem Erfindungsaspekt ausgeführt werden, selbstverständlich im Bezug auf die übrigen Erfindungsaspekte entsprechend gelten, ohne dass es einer ausdrücklichen Erwähnung bedarf.

Weiterhin versteht es sich von selbst, dass bei der nachfolgenden Angabe von Werten, Zahlen und Bereichen die diesbezüglichen Werte-, Zahlen- und Bereichsangaben nicht beschränkend zu verstehen sind; es versteht sich für den Fachmann vielmehr von selbst, dass einzelfallbedingt oder anwendungsbezogen von den angegebenen Bereichen bzw. Angaben abgewichen werden kann, ohne dass der Rahmen der vorliegenden Erfindung verlassen ist.

Zudem gilt, dass alle im Folgenden genannten Werte- bzw. Parameterangaben oder dergleichen grundsätzlich mit genormten bzw. standardisierten oder explizit angegebene Bestimmungsverfahren oder mit dem Fachmann auf diesem Gebiet an sich geläufigen Bestimmungsmethoden ermittelt bzw. bestimmt werden können.

Darüber hinaus versteht es sich von selbst, dass alle gewichts- oder mengenbezogenen Prozentangaben vom Fachmann derart ausgewählt werden, dass in der Summe 100 % resultieren.

Dies vorausgeschickt, wird im Folgenden die vorliegende Erfindung näher beschrieben.

Gegenstand der vorliegenden Erfindung ist somit eine antikorrosive Beschichtungszusammensetzung, enthaltend oberflächenmodifizierte Metallpartikel in Mengen von 30 bis 70 Gew.-%, bezogen auf die Beschichtungszusammensetzung, wobei die Metallpartikel auf Basis reinen Zinks und/oder von Zinklegierungen ausgebildet sind und an ihrer Oberfläche eine anorganisch basierte Modifizierung in Form einer Beschichtung aufweisen, wobei die Modifizierung durch Oxide des Siliciums, Titans und/oder Zirkoniums gebildet wird.

Denn, wie die Anmelderin überraschenderweise herausgefunden hat, lassen sich durch speziell modifizierte Metallpartikel die Langzeitstabilitäten von antikorrosiven Beschichtungszusammensetzungen in wässrigen Bindemittelsystemen, in welche die modifizierten Metallpartikel eingearbeitet sind, deutlich verbessern, wobei die kathodische Korrosionsschutzwirkung gegenüber üblicherweise verwendeten Zinkpigmenten nicht vermindert ist.

Die modifizierten Metallpartikel neigen auch in wässrigem Milieu nicht Oxidation und besitzen bei Einarbeitung in antikorrosive Beschichtungszusammensetzungen, insbesondere Zinklamellenprimer, eine hohe kathodische Schutzwirkung.

Die modifizierten Metallpartikel lassen sich insbesondere bei hydrophiler Modifizierung in hervorragender Weise in wässrigen Systemen dispergieren und weisen nicht die Inkompatibilitäten von mit Stearinsäure gecoateten bzw. beschichteten Metallpigmenten in wässrigen Systemen auf.

Wenn es sich bei den modifizierten Metallpartikeln um modifizierte Zinklamellen handelt, bleibt die silberne Optik der Zinklamellenbeschichtung unter Korrosionsbelastung erhalten. So zeigen beispielsweise Korrosionsschutzbeschichtungen, welche modifizierte Metallpartikel auf Basis von Zink enthalten, im Salzsprühtest eine deutliche Verringerung der Weißrostbildung bzw. kann die Bildung von Weißrost vollständig unterdrückt werden.

Durch die Verminderung bzw. Verhinderung der Weißrostbildung im Fall von Zinkpigmenten kann nicht nur die Stabilität in wässrigen Beschichtungszusammensetzungen deutlich erhöht werden, sondern auch eine optisch ansprechende metallisch glänzende Oberfläche für lösemittelbasierte Beschichtungen langfristig erhalten bleiben. Herkömmliche Zinkpigmente werden in ausgehärteten Beschichtungssystemen - unabhängig davon, ob die Beschichtungszusammensetzung wasser- oder lösemittelbasiert war - oberflächlich unter Weißrostbildung oxidiert, wodurch die mit der Beschichtung versehene behandelte Oberfläche eine fleckige und unschöne ungleichmäßige Färbung annimmt. Um diese Weißrostbildung zumindest zu kaschieren, werden in der Praxis daher der Beschichtungszusammensetzung offene Aluminiumpigmente zugesetzt. Mit den modifizierten Pigmenten bleibt selbst bei Verwendung reiner Zinkpigmente die metallisch glänzende silberfarbene Oberfläche langfristig erhalten.

Mit den modifizierten Metallpigmenten hergestellte Korrosionsschutzbeschichtungen zeigen einen vollständigen kathodischen Korrosionsschutz, d h. auch an Verletzungsstellen, wie beispielsweise im Salzsprühtest am Ritz oder bei Steinschlag an Fahrzeugen sowie an Schnittkanten, oder in unbeschichteten Bereichen. Mit den erfindungsgemäßen modifizierten Metallpartikeln hergestellte Korrosionsschutzbeschichtungen weisen somit eine Fernwirkung bezüglich der kathodischen Schutzwirkung der modifizierten Metallpigmente auf.

Die modifizierten Metallpigmente erweitern das Anwendungsspektrum wässrig basierter antikorrosiver Beschichtungszusammensetzungen. Insbesondere kann auf umweltgefährdende und unter Gesichtspunkten des Arbeitsschutzes problematische organische Lösemittel oder passivierenden Zusätze in Form löslicher Säuren und Salze verzichtet oder ihr Anteil minimiert werden.

Mit den modifizierten Metallpigmenten sind insbesondere wässrig basierte Beschichtungssysteme zugänglich, welche nicht erst kurz vor der Anwendung angemischt werden müssen, sondern bereits vom Hersteller anwendungsfertig bereitgestellt werden können, wodurch Anwendungsfehler minimiert werden.

Unter einer Modifizierung der Metallpartikel ist im Rahmen der vorliegenden Erfindung insbesondere zu verstehen, dass die Metallpartikel in ihren Eigenschaften insbesondere in ihren Oberflächeneigenschaften derart verändert sind, dass sie sich merklich von nichtmodifizierten Metallpartikeln unterscheiden. Dies gilt insbesondere auch für die Oxidationsempfindlichkeit in wässerigem Milieu.

Im Rahmen der vorliegenden Erfindung ist es vorgesehen, dass die Modifizierung in Form einer Beschichtung vorliegt. Im Rahmen der vorliegenden Erfindung werden somit die Metallpigmente vorzugsweise mit einer Schicht, insbesondere einer Hülle, versehen, wobei diese Hülle - ohne sich auf diese Theorie festzulegen - die Metallpigmente homogen umgibt. Die Modifizierung bildet vorzugsweise eine homogene und geschlossene Schicht, welche jedoch höchstwahrscheinlich porös ist, so dass die Partikel elektrisch leitfähige oder quellfähige Schichten bilden können, die unter Korrosionsbelastung einen kathodischen Schutz durch die Pigmente ermöglichen.

Im Rahmen der vorliegenden Erfindung wird die Modifizierung der Metallpartikel in Form einer Schicht üblicherweise insbesondere mittels des Stöber-Verfahrens bzw. der Stöber-Synthese oder einem daran angelehnten Verfahren hergestellt. Bei der Stöber-Synthese werden Siliziumdioxidnanopartikel hergestellt, indem ein hydrolisierbares Silan, insbesondere Tetraethoxysilan zu einer wässrigen alkoholischen Lösung, welche mit Ammoniak basisch eingestellt ist, gegeben wird. Durch die Hydrolyse der Silane werden monodisperse Siliziumdioxidpartikel gebildet, wobei die Partikelgrößen üblicherweise im Bereich von 50 bis 2.000 nm liegen.

Im Rahmen der vorliegenden Erfindung wurde nun gefunden, dass die Stöber-Synthese auch zur Modifizierung von Metallpigmenten geeignet ist. Hierbei wird insbesondere derart vorgegangen, dass Metallpigmente in einer wässrigen alkoholischen Lösung, welche mit Ammoniak basisch eingestellt ist, mit einem hydrolisierbaren Silan versetzt werden. Auf diese Weise ist es möglich, eine sehr homogene Hülle um die Metallpigmente herum zu erhalten, welche in ihrer Dicke genau einstellbar ist.

Die modifizierten Metallpartikel zeigen, wie zuvor dargelegt, bei Einarbeitung in Korrosionsschutzbeschichtungen den gleichen kathodischen Korrosionsschutz wie unmodifizierte Metallpartikel, weisen jedoch aufgrund der anorganischen Beschichtung eine deutlich verbesserte Dispergierbarkeit in wässrig basierten Systemen auf und können darüber hinaus langzeitstabil in wässrige Systeme eingearbeitet werden, und zwar ohne dass insbesondere eine unerwünschte Gasentwicklung in größerem Ausmaß zu beobachten wäre.

Was nun die Schichtdicke der Modifizierung anbelangt, so kann diese naturgemäß in weiten Bereichen variieren. Im Rahmen der vorliegenden Erfindung werden jedoch besonders gute Ergebnisse erhalten, wenn die Modifizierung eine Schichtdicke im Bereich von 3 bis 150 nm, insbesondere 5 bis 120 nm, vorzugsweise 8 bis 100 nm, bevorzugt 10 bis 80 nm, besonders bevorzugt 10 bis 50 nm, aufweist. Besonders gute Ergebnisse werden im Rahmen der vorliegenden Erfindung für Schichtdicken im Bereich 30 bis 40 nm erhalten.

Gleichfalls werden im Rahmen der vorliegenden Erfindung gute Ergebnisse erhalten, wenn die Modifizierung eine theoretische Schichtdicke im Bereich von 3 bis 150 nm, insbesondere 10 bis 100 nm, vorzugsweise 10 bis 50 nm, aufweist. Die theoretische Schichtdicke kann bei bekannter BET-Oberfläche der Metallpartikel und bei bekannter Dichte der Substanz, mit welcher die Metallpartikel modifiziert bzw. beschichtet werden, sowie bei Kenntnis der Masse der eingesetzten Metallpartikel der eingesetzten Beschichtungssubstanz berechnet werden.

In den Versuchen der Anmelderin hat sich gezeigt, dass insbesondere bei Verwendung titandioxid- und/oder siliciumdioxidbasierter Modifizierungen bzw. Beschichtungen die theoretischen Schichtdicken mit den tatsächlich gemessenen Schichtdicken gut übereinstimmen.

Was die Partikelgröße der im Rahmen der vorliegenden Erfindung eingesetzten Metallpartikel anbelangt, so kann diese gleichfalls in weiten Bereichen variieren. Besonders gute Ergebnisse werden jedoch erhalten, wenn die Metallpartikel Partikelgrößen im Bereich von 0,1 bis 30 µm, insbesondere 0,5 bis 20 µm, vorzugsweise 1 bis 15 µm, aufweisen.

Was nun die Form bzw. äußere Gestalt der Metallpartikel anbelangt, so werden im Rahmen der vorliegenden Erfindung üblicherweise plättchenförmige und/oder kornförmige, insbesondere sphärische, Metallpartikel verwendet. Plättchenförmige Metallpartikel werden üblicherweise auch als Lamellen bezeichnet und zeichnen sich durch hervorragende Barriereeigenschaften aus.

Gemäß einer besonders bevorzugten Ausführungsform der vorliegenden Erfindung sind die Metallpartikel plättchenförmige Metallpartikel. Plättchenförmige Metallpartikel werden beispielsweise in Zinklamellenüberzügen eingesetzt und besitzen im Vergleich zu sphärischen Metallpartikeln einen deutlich erhöhten Korrosionsschutz. Dies ist wahrscheinlich darauf zurückzuführen, dass sich die einzelnen Plättchen in einer Korrosionsschutzbeschichtung überlappend anordnen und somit eine durchgängige Schicht elektrischer Leitfähigkeit erzeugt werden kann, welche einen hervorragenden kathodischen Korrosionsschutz gewährleistet.

Wenn im Rahmen der vorliegenden Erfindung plättchenförmigen Metallpartikel verwendet werden, so weisen diese im Allgemeinen eine Dicke von 50 bis 1.000 nm, insbesondere 60 bis 750 nm, vorzugsweise 80 bis 600 nm, bevorzugt 100 bis 500 nm, auf.

Gleichfalls kann es in diesem Zusammenhang vorgesehen sein, dass die plättchenförmigen Metallpartikel einen Durchmesser von 1 bis 25 µm, insbesondere 2 bis 20 µm, vorzugsweise 5 bis 18 µm, bevorzugt 5 bis 15 µm, aufweisen. Die zuvor genannten Durchmesser beziehen sich auf die Ebenen mit der größten Ausdehnung der Metallpartikel.

Falls im Rahmen der vorliegenden Erfindung kornförmige, insbesondere sphärische, Metallpartikel eingesetzt werden, so weisen diese im Allgemeinen Partikeldurchmesser im Bereich von 500 nm bis 20 µm, insbesondere 500 nm bis 10 µm, vorzugsweise 500 nm bis 5 µm, auf.

Erfindungsgemäß sind die Metallpartikel auf Basis reinen Zinks und/oder von Zinklegierungen ausgebildet. In diesem Zusammenhang werden besonders gute Ergebnisse erhalten, wenn die Zinklegierungen ausgewählt sind aus Zink-Bismut-Legierungen, Zink-Aluminium-Legierungen und/oder Zink-Aluminium-Magnesium-Legierungen, insbesondere Zink-Aluminium-Legierungen und/oder Zink-Aluminium-Magnesium-Legierungen. Es hat sich in diesem Zusammenhang besonders bewährt, wenn die Metallpartikel aus Zink-Aluminium-Magnesium-Legierungen bestehen.

Was nun die Modifizierung der Metallpartikel anbelangt, so kann die Modifizierung durch eine Vielzahl von Substanzen oder Substanzgemischen erfolgen. Es hat sich jedoch bewährt, wenn die Modifizierung rein anorganisch ist. Auf diese Weise können insbesondere bei Einarbeitung in wässrige Systeme besonders gute Kompatibilitäten erzielt werden, d. h. eine stabile Langzeitdispergierung in wässrig basierten antikorrosiven Beschichtungszusammensetzungen bzw. Lacksystemen ist ohne Weiteres möglich. Gegebenenfalls kann die anorganisch basierte Beschichtung noch geringe Anteile an organischen funktionellen Gruppen aufweisen, um beispielsweise die Einarbeitung in organisch basierte Systeme, insbesondere Polymersysteme, zu verbessern. Im Rahmen der vorliegenden Erfindung wird jedoch eine rein anorganische Modifizierung bevorzugt.

Erfindungsgemäß wird die Modifizierung durch Oxide des Siliciums, Titans und/oder Zirkoniums gebildet. Besonders gute Ergebnisse werden erhalten, wenn die Modifizierung durch Siliciumdioxid und/oder Titandioxid, bevorzugt durch Siliciumdioxid, gebildet wird. Insbesondere auf Basis von Systemen, welche Siliciumdioxid enthalten, wird einerseits ein besonders guter kathodischer Korrosionsschutz gewährleistet, wobei andererseits die Korrosion der Metallpartikel in wässrigem Milieu entweder vollständig unterdrückt wird oder nur in unbedeutendem Maße stattfindet.

Im Rahmen der vorliegenden Erfindung werden besonders gute Ergebnisse erhalten, wenn die Modifizierung durch Fällungs- und/oder Kondensationsreaktionen, bevorzugt durch Kondensationsreaktionen, auf den Metallpartikeln erzeugt wird. Auf diese Weise lässt sich einerseits ein besonders inniger Verbund der anorganischen Modifizierung mit den Metallpartikeln erzielen, welcher so stabil ist, dass die Metallpartikel in wässrigem Milieu nicht angegriffen und korrodiert werden, andererseits weisen jedoch antikorrosive Beschichtungszusammensetzungen, welche die modifizierten Metallpartikel enthalten, höchsten kathodischen Korrosionsschutz auf.

Es zeigen die beiden Figurendarstellungen gemäß
- Fig. 1:: einen Vergleich zwischen einem Zinklamellenüberzug, welcher die erfindungsgemäßen modifizierten Metallpartikel enthält, und einem gleichartigen Zinklamellenüberzug mit herkömmlichen Zinklamellen im Salzsprühtest am Ritz gemäß DIN EN ISO 9227 nach 24 Stunden und
- Fig. 2:: einen Vergleich zwischen einem Zinklamellenüberzug mit den erfindungsgemäß modifizierten Metallpartikeln und einem Zinklamellenüberzug mit herkömmlichen Zinklamellen im Salzsprühtest am Ritz gemäß DIN EN ISO 9227 nach sieben Tagen.

Weiterer Gegenstand der vorliegenden Erfindung ist die Verwendung der zuvor beschriebenen Metallpartikel, wobei die auf Basis reinen Zinks und/oder Zinklegierungen ausgebildet sind und an ihrer Oberfläche eine anorganisch basierte Modifizierung in Form einer Beschichtung aufweisen, zur Herstellung von kathodischen Korrosionsschutzbeschichtungen und kathodischen antikorrosiven Beschichtungszusammensetzungen.

Für weitergehende Einzelheiten zu der erfindungsgemäßen Verwendung kann auf die obigen Ausführungen zu der erfindungsgemäßen Beschichtungszusammensetzung verwiesen werden, welche in Bezug auf die erfindungsgemäße Verwendung entsprechend gelten.

Die zuvor beschriebenen Metallpartikel sind nach einem Verfahren erhältlich, wobei
(a) in einem ersten Verfahrensschritt Metallpartikel in einem wässrig basierten Dispersionsmittel dispergiert werden und
(b) in einem nachfolgenden zweiten Verfahrensschritt die in Verfahrensschritt (a) dispergierten Metallpartikel mit einer anorganisch basierten Schicht, insbesondere einer Beschichtung, überzogen werden.

Im Rahmen des Verfahrens wird somit insbesondere eine anorganisch basierte Hülle um die Metallpartikel herum aufgebaut, um einerseits eine bessere Dispergierbarkeit der modifizierten Metallpartikel in wässrigen Systemen zu gewährleisten und andererseits die Korrosion der Metallpartikel in wässrigem Milieu zu verhindern.

Durch das Verfahren wird einerseits eine stabile Langzeitdispergierbarkeit der Metallpartikel ermöglicht, andererseits wird jedoch die Eignung der Metallpartikel für den kathodischen Korrosionsschutz nicht beeinträchtigt, so dass diese nicht nur wie herkömmliche Korrosionsschutzpigmente eingesetzt werden können, sondern vielmehr auch ein erweitertes Anwendungsfeld, insbesondere in wässrigen Systemen besitzen. Darüber hinaus eignen sich die durch das Verfahren hergestellten Pigmente auch zur Einarbeitung in lösemittelbasierten Beschichtungssystemen, da sie deutlich verbesserte Korrosionsbeständigkeiten, insbesondere gegenüber Weißrost, aufweisen, dass eine entsprechende Optik der Beschichtung lange erhalten bleibt.

Üblicherweise wird im Rahmen der vorliegenden Erfindung die anorganisch basierte Schicht mit einer Schichtdicke im Bereich von 3 bis 150 nm, insbesondere 5 bis 120 nm, vorzugsweise 8 bis 100 nm, bevorzugt 10 bis 80 nm, besonders bevorzugt 10 bis 50 nm, auf den Metallpartikeln abgeschieden.

Erfindungsgemäß ist es vorgesehen, dass die anorganisch basierte Schicht aus organischen Oxiden gebildet wird.

Weiterhin ist es erfindungsgemäß vorgesehen, dass die anorganisch basierte Schicht durch Oxide des Siliciums, Titans und/oder Zirkoniums gebildet wird, vorzugsweise durch Siliciumdioxid und/oder Titandioxid, bevorzugt durch Siliciumdioxid. Insbesondere bei Verwendung von Siliciumdioxid für die anorganisch basierte Schicht wird ein besonders hoher Schutz der Metallpartikel gegenüber Korrosion in wässrigem Milieu erzielt.

Gemäß einer besonderen Ausführungsform der vorliegenden Erfindung kann es vorgesehen sein, dass die anorganisch basierte Schicht organisch modifiziert ist. Insbesondere kann es in diesem Zusammenhang vorgesehen sein, dass die anorganisch basierte Schicht mit Alkyl-, Aryl-, Amin- und/oder Epoxidgruppen und/oder mit aromatischen Gruppen, wie beispielsweise Phenoxygruppen modifiziert ist. Üblicherweise ist es im Rahmen der vorliegenden Erfindung jedoch vorgesehen, dass die anorganisch basierte Schicht rein anorganisch ist.

Gemäß einer bevorzugten Ausführungsform des Verfahrens wird in Verfahrensschritt (b) die anorganisch basierte Schicht durch chemische Reaktion, insbesondere Fällungs- und/oder Kondensationsreaktion, vorzugsweise Kondensationsreaktion auf den Metallpartikeln abgeschieden.

Bei Fällungsreaktionen werden Stoffe durch Überschreitung des Löslichkeitsproduktes aus Lösungen oder Dispersion als Feststoff ausgefällt. Bei Kondensationsreaktionen werden einzelne Moleküle durch Wasserabspaltung miteinander verknüpft, so dass sich dreidimensionale Netzwerke ausbilden, welche dann zu einem Ausfallen der Substanz bzw. zur Bildung von Festkörpern führen. Kondensationsreaktionen können beispielsweise bei anorganischen Verbindungen, wie Silikaten, oftmals durch eine pH-Wertänderung induziert werden. Es handelt sich dann um Fällungsreaktionen, welche durch Kondensation erfolgen.

Insbesondere durch Kondensationsreaktionen wird ein relativ langsames und gleichmäßiges Abscheiden des Feststoffes auf den Metallpartikeln gewährleistet, wobei in den Lösungen auch einzelne Agglomerate gebildet werden, welche sich dann an die Oberfläche der Metallpartikel anlagern.

Üblicherweise ist es im Rahmen des Verfahrens vorgesehen, dass in Verfahrensschritt (b) die die Metallpartikel enthaltende Dispersion mit mindestens einem Modifizierungsreagenz versetzt wird. Besonders bevorzugt wird es im Rahmen dabei, wenn es sich bei dem Modifizierungsreagenz um eine Vorläufersubstanz, insbesondere ein Precursor, handelt. Vorläufersubstanzen bzw. Precursoren werden durch chemische Reaktion, gegebenenfalls über mehrere Zwischenstufen, in die jeweiligen Endprodukte überführt.

Im Rahmen des Verfahrens ist es bevorzugt, wenn das Modifizierungsreagenz nach und/oder unter chemischer Reaktion auf den Metallpartikeln abgeschieden wird.

Im Rahmen des Verfahrens werden besonders gute Ergebnisse erhalten, wenn das Modifizierungsreagenz ausgewählt ist aus Silanen, Titanaten und Zirkonaten sowie deren Mischungen, insbesondere Silanen und Titanaten und deren Mischungen, insbesondere Silanen. Mit Silanen, Titanaten und Zirkonaten sowie deren Mischungen können besonders stabile und beständige anorganische Schichten auf den Metallpartikeln erzeugt werden, welche durch Kondensationsreaktionen mit den Hydroxyfunktionen der auf der Oberfläche der Metalle vorhandenen Oxide bzw. Hydroxide eine stabile Verbindung eingehen können.

Wenn im Rahmen des Verfahrens ein Silan als Modifizierungsmittel verwendet wird, so hat es sich bewährt, wenn das Silan ausgewählt ist aus Silanen der allgemeinen Formel I

R₄₋ₙSiXₙ (I)

mit
- R =: Alkyl, insbesondere C₁- bis C₅-Alkyl, vorzugsweise C₁- bis C₃-Alkyl, bevorzugt C₁- und/oder C₂-Alkyl;
Aryl, insbesondere C₆- bis C₂₀-Aryl, vorzugsweise C₆- bis C₁₅-Aryl, bevorzugt C₆- bis C₁₀-Aryl;
Olefin, insbesondere terminales Olefin, vorzugsweise C₂- bis C₁₀-Olefin, bevorzugt C₂- bis C₈-Olefin, besonders bevorzugt C₂- bis C₅-Olefin, ganz besonders bevorzugt C₂- und/oder C₃-Olefin, insbesondere bevorzugt Vinyl;
Amin, insbesondere C₂- bis C₁₀-Amin, vorzugsweise C₂- bis C₈-Amin, bevorzugt C₂- bis C₅-Amin, besonders bevorzugt C₂- und/oder C₃-Amin;
Carbonsäure, insbesondere C₂- bis C₁₀-Carbonsäure, vorzugsweise C₂-bis C₈-Carbonsäure, bevorzugt C₂- bis C₅-Carbonsäure, besonders bevorzugt C₂- und/oder C₃-Carbonsäure;
Alkohol, insbesondere C₂- bis C₁₀-Alkohol, vorzugsweise C₂- bis C₈-Alkohol, bevorzugt C₂- bis C₅-Alkohol, besonders bevorzugt C₂- und/oder C₃-Alkohol;
- X =: Halogen, insbesondere Chlor und/oder Brom;
Alkoxy, Insbesondere C₁- bis C₆-Alkoxy, besonders bevorzugt C₁- bis C₄- Alkoxy, ganz besonders bevorzugt C₁- und/oder C₂-Alkoxy; und
- n =: 0 bis 4, insbesondere 0 bis 2, vorzugsweise 0 oder 1.

Im Rahmen des Verfahrens können somit auch Silane eingesetzt werden, welche nichthydrolysierbare organische Gruppen aufweisen. Jedoch werden Silane mit nichthydroliserbaren Gruppen - wenn überhaupt - nur in geringen Mengen eingesetzt, um beispielsweise die Kompatibilität mit organischen Bindemittelsystemen zu erhöhen. Vorzugsweise werden im Rahmen des Verfahrens jedoch keine Silane mit nichthydrolisierbaren Gruppen eingesetzt.

Gemäß einer bevorzugten Ausführungsform des Verfahrens ist das Modifizierungsreagenz ein Tetraalkoxysilan. In diesem Zusammenhang werden besonders gute Ergebnisse erhalten, wenn das Silan ausgewählt aus Tetra(C₁- bis C₆-Alkoxy)silanen, insbesondere Tetra(C₁- bis C₄-Alkoxy)silanen, vorzugsweise Tetra(C₁- und C₂-Alkoxy)silanen.

Im Rahmen des Verfahrens wird es besonders bevorzugt, wenn das Modifizierungsreagenz Tetraethoxysilan ist.

Wie zuvor ausgeführt, wird im Rahmen des Verfahrens ein wässrig basiertes Dispersionsmittel verwendet. Besonders gute Ergebnisse werden in diesem Zusammenhang erhalten, wenn das in Verfahrensschritt (a) eingesetzte Dispersionsmittel Wasser oder eine Mischung aus Wasser und organischen Lösemitteln, insbesondere eine Mischung aus Wasser und organischen Lösemitteln, ist.

Unter einer Dispersion ist im Rahmen der vorliegenden Erfindung ein mehrphasiges System, bei welchem ein oder mehrere Stoffe, die sogenannte disperse Phase, fein verteilt in einer weiteren, der kontinuierlichen Phase, auch als Dispersionsmittel oder Dispersionsmedium bezeichnet, vorliegen, zu verstehen.

Wenn im Rahmen des Verfahrens ein organisches Lösemittel als Dispersionsmittel, gegebenenfalls in Kombination mit Wasser, eingesetzt wird, so ist das organische Lösemittel üblicherweise ausgewählt aus der Gruppe von Alkoholen, Ethern, Carbonsäureestern, Ketonen, Amiden und deren Mischungen.

In diesem Zusammenhang kann es insbesondere vorgesehen sein, dass das organische Lösemittel ausgewählt ist aus C₁- bis C₆-Alkoholen, Diethylether, Glycolethern, Essigsäureethylester, Aceton, N,N-Dimethylformamid und deren Mischungen.

Besonders gute Ergebnisse werden erhalten, wenn das organische Lösemittel ausgewählt ist aus Methanol, Ethanol, 1-Propanol, 2-Propanol, Butanol und deren Mischungen. Besonders bevorzugt wird es dabei, wenn das organische Lösemittel ausgewählt ist aus Methanol, Ethanol, 2-Propanol und deren Mischungen. Die besten Ergebnisse werden im Rahmen der vorliegenden Erfindung erhalten, wenn das organische Lösemittel Ethanol ist.

Wenn Mischungen aus Wasser und einem organischen Lösemittel eingesetzt werden, so hat es sich bewährt, wenn das Dispersionsmittel ein gewichtsbezogenes Verhältnis von organischem Lösemittel zu Wasser im Bereich von 1 : 5 bis 10 : 1, insbesondere 1 : 2 bis 6 : 1, vorzugsweise 1 : 1 bis 5 : 1, bevorzugt 2 : 1 bis 4 : 1, besonders bevorzugt 2,5 : 1 bis 3,5 : 1, aufweist. Bei Verhältnissen von organischem Lösemittel zu Wasser in den vorgenannten Verhältnissen kann insbesondere die Hydrolyse der anorganischen Modifizierungsreagenzien, wie beispielsweise von Silanen, gezielt gesteuert werden, so dass sich Beschichtungen mit den gewünschten Eigenschaften auf den Metallpartikeln erzeugen lassen.

Üblicherweise wird in Verfahrensschritt (a) ein gewichtsbezogenes Verhältnis von Dispersionsmittel zu Metallpartikeln im Bereich von 1 : 1 bis 20 : 1, insbesondere 5 : 1 bis 15 : 1, vorzugsweise 7 : 1 bis 12 : 1, bevorzugt 9 : 1 bis 10 : 1, eingestellt. Bei dem gewichtsbezogenen Verhältnis von Dispersionsmittel zu Metallpartikeln in den vorgenannten Bereichen lässt sich eine gleichmäßige Dispergierung der Metallpartikel und eine gute Durchmischung mit dem Modifizierungsreagenz erhalten, so dass insgesamt die Partikel gleichmäßig beschichtet werden können.

Weiterhin kann es vorgesehen sein, dass die in Verfahrensschritt (a) hergestellte Dispersion das Dispersionsmittel in Mengen von 40 bis 99 Gew.-%, insbesondere 50 bis 98 Gew.-%, vorzugsweise 70 bis 95 Gew.-%, bevorzugt 80 bis 95 Gew.-%, bezogen auf die Dispersion, enthält.

Gleichfalls kann es vorgesehen sein, dass die in Verfahrensschritt (a) hergestellte Dispersion die Metallpartikel in Mengen von 1 bis 60 Gew.-%, insbesondere 2 bis 50 Gew.-%, vorzugsweise 5 bis 30 Gew.-%, bevorzugt 5 bis 15 Gew.-%, bezogen auf die Dispersion enthält.

Was den pH-Wert der in Verfahrensschritt (a) hergestellten Dispersion anbelangt, so kann dieser gleichfalls in weiten Bereichen variieren. Es hat sich jedoch bewährt, wenn in Verfahrensschritt (a) der pH-Wert der Dispersion auf Werte im Bereich von 7 bis 10, insbesondere 8 bis 9, eingestellt wird.

Wenn in Verfahrensschritt (a) der pH-Wert auf spezielle Werte eingestellt wird, so erfolgt dies üblicherweise durch Zugabe einer Base, insbesondere durch Zugabe einer wässrigen Lösung einer Base. Besonders bevorzugt wird es dabei im Rahmen der vorliegenden Erfindung, wenn der pH-Wert durch Zugabe von Natronlauge, Kalilauge, wässriger Ammoniaklösung oder deren Mischungen eingestellt wird, wobei die Einstellung des pH-Wertes durch Zugabe wässriger Ammoniaklösung besonders bevorzugt ist, da keine zusätzlichen Ionen, insbesondere Kationen, in die Dispersion eingebracht werden, welche die nachfolgende Abscheidung der Modifizierung stören könnten.

Was nun den Temperaturbereich anbelangt, in welchem Verfahrensschritt (a) durchgeführt wird, so kann dieser gleichfalls in weiten Bereichen variieren. Es hat sich jedoch bewährt, wenn Verfahrensschritt (a) bei Temperaturen im Bereich von 10 bis 50 °C, insbesondere 15 bis 40 °C, vorzugsweise 20 bis 30 °C, durchgeführt wird.

Wie zuvor ausgeführt, wird in Verfahrensschritt (b) die in Verfahrensschritt (a) hergestellte Dispersion mit einem Modifizierungsreagenz versetzt. Was nun die Menge an Modifizierungsreagenz anbelangt, mit welcher die Dispersion aus Verfahrensschritt (a) in Verfahrensschritt (b) versetzt wird, so kann diese gleichfalls in weiten Bereichen in Abhängigkeit von der zu erzielenden Schichtdicke der Modifizierung variiert werden. Es hat sich jedoch bewährt, wenn in Verfahrensschritt (b) ein gewichtsbezogenes Verhältnis von Modifizierungsreagenz zu Metallpartikeln im Bereich von 1 : 10 bis 10 : 1, insbesondere 1 : 8 bis 7 : 1, vorzugsweise 1 : 5 bis 5 : 1, bevorzugt 1 : 4 bis 4 : 1, eingestellt wird. Bei Verwendung des Modifizierungsreagenzes in vorgenannten Verhältnissen lassen sich insbesondere Schichtdicken der Modifizierung im Bereich von 5 bis 50 nm erzielen.

Darüber hinaus kann es vorgesehen sein, dass in Verfahrensschritt (b) ein gewichtsbezogenes Verhältnis von Modifizierungsreagenz zu Metallpartikeln im Bereich von 1 : 1 bis 1 : 4, insbesondere 1 : 2 bis 1 : 3 eingestellt wird. Den vorgenannten Verhältnissen lassen sich insbesondere Beschichtungen mit einer Schichtdicke von ca. 0,05 µm erzeugen.

Weiterhin kann es vorgesehen sein, dass in Verfahrensschritt (b) die Dispersion nach Zusatz des Modifizierungsmittels das Dispersionsmittel in Mengen von 40 bis 98 Gew.-%, insbesondere 50 bis 96 Gew.-%, vorzugsweise 70 bis 95 Gew.-%, besonders bevorzugt 85 bis 95 Gew.-%, bezogen auf die Dispersion, aufweist.

Weiterhin kann es vorgesehen sein, dass in Verfahrensschritt (b) die Dispersion die Metallpartikel in Mengen von 1 bis 50 Gew.-%, insbesondere 2 bis 40 Gew.-%, bevorzugt 3 bis 20 Gew.-%, besonders bevorzugt 5 bis 10 Gew.-%, bezogen auf die Dispersion, aufweist.

Gleichfalls kann es vorgesehen sein, dass in Verfahrensschritt (b) die Dispersion das Modifizierungsmittel in Mengen von 1 bis 40 Gew.-%, insbesondere 2 bis 25 Gew.-%, vorzugsweise 2 bis 5 Gew.-%, bezogen auf die Dispersion, aufweist.

Was nun die Temperatur anbelangt, bei welcher Verfahrensschritt (b) durchgeführt wird, so hat es sich bewährt, wenn Verfahrensschritt (b) bei Temperaturen im Bereich von 10 bis 50 °C, insbesondere 15 bis 40 °C, vorzugsweise 20 bis 30 °C, durchgeführt wird. In den vorgenannten Temperaturbereichen lässt sich die Wachstumskinetik der Beschichtung derart steuern, dass besonders stabile Beschichtungen erzielt werden, welche jedoch bei Einarbeitung der beschichteten Metallpartikel in Lacksysteme elektrische Leitfähigkeit und somit kathodischen Korrosionsschutz gewährleisten.

Wie zuvor bereits ausgeführt, kann die Modifizierung der Metallpigmente im Rahmen der vorliegenden Erfindung insbesondere durch eine Stöber-Synthese bzw. ein daran angelehntes Verfahren erhalten werden.

Üblicherweise ist es vorgesehen, dass in einem auf den Verfahrensschritt (b) folgenden Verfahrensschritt (c) das Dispersionsmittel entfernt wird, insbesondere durch Dekantieren oder Filtrieren.

Darüber hinaus kann es im Rahmen des Verfahrens vorgesehen sein, dass in Verfahrensschritt (c) die Metallpartikel nach Entfernen des Dispersionsmittels getrocknet werden, insbesondere bei Temperaturen im Bereich von 50 bis 150 °C, insbesondere 60 bis 120 °C, vorzugsweise 70 bis 100 °C, bevorzugt 75 bis 90 °C. Eine Trocknung der Metallpartikel im vorgenannten Temperaturbereich ermöglicht eine nochmals verbesserte Anbindung der Modifizierung an die Oberfläche der Metallpartikel.

Bei der klassischen Stöbersynthese werden die erhaltenen Nanopartikel hingegen nicht getrocknet werden, sondern vielmehr noch durch das Lösemittel bis zum dispergiermittelbenetztem Zustand weiterverarbeitet werden, insbesondere auch in Beschichtungssysteme eingearbeitet werden, um ein unerwünschtes Agglomerieren der Partikel zu verhindern.

Im Rahmen der des Verfahrens wird es darüber hinaus bevorzugt, wenn die Metallpartikel getrocknet werden, bis sie einen Wassergehalt zwischen 0,01 bis 2 Gew.-%, insbesondere 0,1 bis 1,5 Gew.-%, insbesondere 0,2 bis 1 Gew.-%, bevorzugt 0,5 bis 0,9 Gew.-%, bezogen auf die beschichteten Metallpartikel, aufweisen.

Wie zuvor dargelegt, enthält die Beschichtungszusammensetzung die Metallpartikel in Mengen von 30 bis 70 Gew.-%, bevorzugt 40 bis 60 Gew.-%.

Weiterhin ist es im Rahmen der vorliegenden Erfindung üblicherweise vorgesehen, dass die Beschichtungszusammensetzung ein Bindemittel enthält. Wenn die Beschichtungszusammensetzung ein Bindemittel enthält, so enthält die Beschichtungszusammensetzung das Bindemittel üblicherweise in Mengen von 5 bis 60 Gew.-%, vorzugweise 6 bis 40 Gew.-%, bevorzugt 7 bis 20 Gew.-%, besonders bevorzugt 8 bis 15 Gew.-%, bezogen auf die Beschichtungszusammensetzung.

Was nun das Bindemittel anbelangt, welches im Rahmen der vorliegenden Erfindung für die antikorrosive Beschichtungszusammensetzung verwendet wird, so kann hier eine weite Auswahl an Bindemitteln verwendet werden. Es hat sich jedoch bewährt, wenn das Bindemittel ausgewählt aus der Gruppe von Silanen, Silanolen, Silanhydrolysaten, Polysiloxanen, Silikaten, Titanaten, Zirkonaten, Polyurethanen, Polyacrylaten, Polyethern, Polyestern und deren Mischungen. Besonders gute Ergebnisse werden dabei erhalten, wenn anorganisch basierte Bindemittel verwendet werden. Im Rahmen der vorliegenden Erfindung ist es somit bevorzugt, wenn das Bindemittel ausgewählt ist aus der Gruppe von Silanen, Silanolen, Silanhydrolysaten, Polysiloxanen, Silikaten, Titanaten und deren Mischungen.

Bei den im Rahmen der vorliegenden Erfindung bevorzugt eingesetzten Silikaten handelt es sich um Natriumsilikat und Kaliumsilikat, welche insbesondere in Form ihrer wässrigen Lösungen, den sogenannten Wassergläsern - Natriumwasserglas und Kaliumwasserglas - eingesetzt werden.

Gemäß einer bevorzugten Ausführungsform der vorliegenden Erfindung sind die für die erfindungsgemäße antikorrosive Beschichtungszusammensetzung verwendeten Silane derart ausgewählt, dass sie nichthydrolysierbare organische Gruppen aufweisen. Die nichthydrolysierbaren organischen Gruppen sind insbesondere ausgewählt aus Alkyl-, Vinyl- und Aryl-Gruppen, wobei eine zusätzliche Funktionalisierung der Gruppen mit Aminen oder Epoxiden möglich ist. Insbesondere sind auch die im Zusammenhang mit der Beschichtung der erfindungsgemäßen Metallpartikel aufgezählten Silane für das Bindemittel der antikorrosiven Beschichtungszusammensetzung verwendbar.

Bevorzugt eingesetzte Polysiloxane weisen Alkyl- und/oder Arylgruppen auf, wobei insbesondere Methylgruppen, Phenylgruppen und Methylphenylgruppen besonders bevorzugt sind.

Als Titanate und Zirkonate werden typische Titan- bzw. Zirkonium-Alkoxyverbindungen eingesetzt, als Beispiele seien Tetra-n-butyltitanat, Tetraisopropyltitanat oder Vinyltri-n-butlytitanat genannt.

Im Rahmen der vorliegenden Erfindung ist es üblicherweise vorgesehen, dass die antikorrosive Beschichtungszusammensetzung ein Dispersionsmittel, insbesondere ein wässrig basiertes Dispersionsmittel, aufweist.

Im Allgemeinen enthält die antikorrosive Beschichtungszusammensetzung das Dispersionsmittel in Mengen von 10 bis 70 Gew.-%, insbesondere 20 bis 60 Gew.-%, vorzugsweise 25 bis 50 Gew.-%, bevorzugt 30 bis 40 Gew.-%, bezogen auf die antikorrosive Beschichtungszusammensetzung.

Im Rahmen der vorliegenden Erfindung wird bevorzugt ein wässrig basiertes Dispersionsmittel für die antikorrosive Beschichtungszusammensetzung verwendet. Besonders gute Ergebnisse werden in diesem Zusammenhang erhalten, wenn das die antikorrosive Beschichtungszusammensetzung neben Wasser noch geringe Anteile an organischen Lösemitteln als Dispersionsmittel enthält.

Besonders gute Ergebnisse werden in diesem Zusammenhang erhalten, wenn die antikorrosive Beschichtungszusammensetzung ein gewichtsbezogenes Verhältnis von Wasser zu organischem Lösemittel im Bereich von 1 : 1 bis 20: 1, insbesondere 2 : 1 bis 15 : 1, vorzugsweise 3 : 1 bis 10: 1, bevorzugt 4 : 1 bis 6 : 1, aufweist.

Wenn im Rahmen des erfindungsgemäßen Verfahrens ein organisches Lösemittel als Dispersionsmittel der antikorrosiven Beschichtungszusammensetzung, gegebenenfalls in Kombination mit Wasser, eingesetzt wird, so ist das organische Lösemittel üblicherweise ausgewählt ist aus der Gruppe von Alkoholen, Ethern, Carbonsäureestern, Ketonen, Amiden, aliphatischen Nitroverbindungen und deren Mischungen.

Darüber hinaus kann es im Rahmen der vorliegenden Erfindung vorgesehen sein, dass die Beschichtungszusammensetzung mindestens ein Additiv enthält. Wenn die Beschichtungszusammensetzung ein Additiv enthält, so enthält die Beschichtungszusammensetzung das Additiv üblicherweise in Mengen von 0,1 bis 10 Gew.-%, insbesondere 1 bis 6 Gew.-%, vorzugsweise 3 bis 5 Gew.-%, bezogen auf die Beschichtungszusammensetzung.

Als Additive kommen sämtliche Verbindungen und Verbindungsgemische in Betracht, welche die Eigenschaften der Beschichtungszusammensetzung in der gewünschten Weise beeinflussen können.

Üblicherweise ist das Additiv jedoch ausgewählt aus Netzmitteln, Dispergiermitteln, Entschäumern, Verdickern, Rheologiestellmitteln, Stabilisatoren, pH-Stellmitteln, Füllstoffen, Korrosionsschutzadditiven und deren Mischungen.

Als Netzmittel oder Dispergiermittel werden beispielsweise kationische, anionische und nichtionische Netz- bzw. Dispergiermittel verwendet. Üblicherweise verwendete Netz- und Dispergiermittel sind beispielsweise ethoxylierte Alkohole, wie Alkylphenolethoxylate, oder ethoxylierte Fettsäuren. Als Netzmittel werden beispielsweise Alkylethersulfonate, Alkylsulfosuccinate und Dialkylsulfosuccinate, wie beispielsweise Natriumdioctylsulfosuccinat, eingesetzt.

Wenn die antikorrosive Beschichtungszusammensetzung einen Entschäumer enthält, so ist dieser Entschäumer üblicherweise ausgewählt aus Mineralölentschäumern oder Silikonentschäumern, wie beispielsweise Polyethersiloxanen.

Zur Einstellung der Viskosität können der Beschichtungszusammensetzung auch Verdicker zugesetzt werden, welche üblicherweise ausgewählt sind aus Cellulosederivaten, wie beispielsweise Hydroxyethylcellulose, Methylcellulose, Methylethylcellulose, Methylhydroxypropylcellulose, Ethylhydroxyethylcellulose, oder Zuckerderivaten, wie beispielsweise Xanthan. Darüber hinaus können jedoch auch Schichtsilikate oder pyrogene Kieselsäure sowie Polyurethanverbindungen als Verdicker verwendet werden.

Darüber hinaus kann die Beschichtungszusammensetzung weitere Additive, wie insbesondere Korrosionsschutzadditive aufweisen. Übliche Korrosionsschutzadditive sind beispielsweise Phosphorsäuren, Phosphonsäuren oder deren Salze sowie Citrate, Ascorbate oder Molybdate. Darüber hinaus können beispielsweise organische Nitrate, wie beispielsweise aliphatische Nitrate oder Mono- bzw. Oligonitrate der Benzoe- oder Salicylsäure als Korrosionsschutzadditive verwendet werden.

Wenn die antikorrosive Beschichtungszusammensetzung einen Stabilisator enthält, so ist der Stabilisator üblicherweise ausgewählt aus komplexen An- oder Kationen der Übergangsmetalle. Geeignete Stabilisatoren sind insbesondere Polyoxometalate, wie beispielsweise Polyvanadate. Darüber hinaus sind auch Molybdate, wie beispielsweise Ammoniummolybdat, oder Wolframate, wie Kaliumwolframat, oder Kaliumpermanganat als Stabilisatoren geeignet.

Für weitergehende Einzelheiten zu diesem Erfindungsaspekt kann zu den obigen Ausführungen zu den übrigen Erfindungsaspekten verwiesen werden, welche im Bezug auf die erfindungsgemäße antikorrosive Beschichtungszusammensetzung entsprechend gelten.

Zur Erzeugung der Korrosionsschutzbeschichtung wird die antikorrosive Beschichtungszusammensetzung mit einer Schichtstärke von üblicherweise 2 bis 20, insbesondere 3 bis 15, vorzugsweise 5 bis 10 µm, auf ein Substrat aufgebracht. Bei dem Substrat handelt es sich üblicherweise um ein metallisches Substrat, insbesondere um ein eisenhaltiges Substrat, vorzugsweise um ein Stahl aufweisendes oder aus Stahl bestehendes Substrat.

Der Auftrag der antikorrosiven Beschichtungszusammensetzung kann dabei durch jedes geeignete Verfahren erfolgen. Üblicherweise wird die Beschichtungszusammensetzung jedoch durch Tauchen, Tauchschleudern, Rakeln, Sprühen, Coil-Coating-Verfahren oder Streichen auf das Substrat aufgebracht.

Nach Auftragung der Beschichtungszusammensetzung auf das Substrat wird die Beschichtungszusammensetzung üblicherweise einer thermischen Behandlung im Bereich von 50 bis 300 °C, insbesondere 70 bis 250 °C, insbesondere 100 bis 200 °C, unterzogen, um eine vollständige Aushärtung und Vernetzung der Beschichtungszusammensetzung zu gewährleisten.

Schließlich ist weiterer Gegenstand der vorliegenden Erfindung eine Korrosionsschutzbeschichtung, welche aus der zuvor beschriebenen antikorrosiven Beschichtungszusammensetzung erhältlich ist.

Für weitergehende Einzelheiten zu der erfindungsgemäßen Korrosionsschutzbeschichtung kann auf die obigen Ausführungen zu den Erfindungsaspekten verwiesen werden, welche im Bezug auf die Korrosionsschutzbeschichtungen entsprechend gelten.

Der Gegenstand der vorliegenden Erfindung wird nachfolgend in nicht beschränkender Weise anhand der Ausführungsbeispiele verdeutlicht.

### Ausführungsbeispiele:

In dem nachfolgenden Versuch wird die Herstellung modifizierter Metallpartikel sowie ihre Verwendung in antikorrosiven Beschichtungszusammensetzungen anhand einer bevorzugten Ausführungsform, nämlicher modifizierter Zinklamellen, beschrieben:

### 1. Herstellung modifizierter Zinkpartikel

Für die Herstellung der modifizierten Metallpartikel werden handelsübliche mit Stearinsäure gecoatete Zinklamellen (Zinkflakes) zur Vorbereitung auf die weitere Behandlung entfettet und anschließend getrocknet.

Die Zinklamellen besitzen eine spezifische Oberfläche von 1 m²/g.

Zur Beschichtung der Zinklamellen wird eine Dispersion der in Tabelle 1 aufgeführten Zusammensetzung hergestellt:

**Tabelle 1: Dispersion zur Herstellung modifizierter Metallpigmente**

| **Komponente** | **Gewichtsteile** |
|---|---|
| Ethanol | 79,0 |
| Wasser | 27,0 |
| Ammoniaklösung (25 %) | 2,5 |
| Zinklamellen | 10,0 |
| Tetraethoxysilan | 3,5 |
| Summe | 122,0 |

Zur Herstellung der oben angegebenen Dispersion werden Ethanol, Wasser und Ammoniaklösung vorgelegt und bei Raumtemperatur unter Rühren mit den Zinklamellen versetzt. Es entsteht eine Dispersion, welche nachfolgend mit dem Tetraethoxysilan bei Raumtemperatur versetzt wird. Die Dispersion wird nach Zugabe des Tetraethoxysilan zwei Stunden bei Raumtemperatur gerührt und anschließend das Dispersionsmittelgemisch durch Filtration abgetrennt. Die isolierten Zinklamellen werden bei 80 °C im Ofen getrocknet bis sie einen Wassergehalt von 0,8 Gew.-% aufweisen. Die modifizierten Zinklamellen weisen eine Siliciumdioxidschicht mit einer mittleren Dicke von ca. 0,05 µm auf.

### 2. Gasungstest

Für den nachfolgenden Gasungstest wird die Wasserstoffentwicklung von modifizierten Zinklamellen mit der von Stearinsäure gecoateten Zinklamellen in wässrigem Milieu verglichen. Hierzu wird eine Einwaage von ca. 3 g an Zinklamellen in einem Erlenmeyerkolben mit 40 g Wasser übergossen und die Mischung anschließend bei ca. 34 °C gerührt. Das entstehende Gas wird aufgefangen und die aufgefangene Menge stets nach 24 Stunden kontrolliert.

**Tabelle 2: Ergebnisse des Gasungstests**

| **Probe** | **Einwaage Metallpartikel [g]** | **Gasmenge [ml]** | | | | | | | |
|---|---|---|---|---|---|---|---|---|---|
| | | **24 h** | **48 h** | **72h** | **96 h** | **120** h | **144 h** | **168 h** | **Gesamtmenge** |
| Zinklamelle (mit Sterainsäure gecoatet; Vergleich) | 3,00 | 33,42 | 2,36 | 19,96 | 13,48 | 25,00 | 35,82 | 32,91 | 162,95 |
| Zinklamelle (mit Sterainsäure gecoatet; Vergleich) | 2,98 | 34,39 | 2,72 | 10,73 | 10,91 | 9,30 | 21,24 | 10,97 | 100,26 |
| Zinklamelle (mit SiO₂ beschichtet; erfindungsgemäß) | 3,00 | 7,31 | 0 | 7,79 | 6,10 | 6,84 | 7,13 | 5,35 | 40,52 |
| Zinklamelle (mit SiO₂ beschichtet; erfindungsgemäß) | 2 ,99 | 8,10 | 0 | 8,50 | 7,39 | 7,70 | 7,34 | 5,69 | 44,72 |

Es zeigt sich, dass die mit einer SiO₂-Schicht versehenen Zinklamellen eine deutlich geringere Wasserstoffentwicklung aufweisen als die mit Stearinsäure gecoateten Zinklamellen.

Darüber hinaus lassen sich die mit SiO₂-modifizierten Zinklamellen deutlich leichter in wässrigem Medium dispergieren als die mit Stearinsäure gecoateten Zinklamellen, insbesondere können die modifizierten Zinklamellen einfach mit einem Flügelrührer unter Erhalt silberner Dispersionen in Wasser eingerührt werden.

### 3. Verwendung der modifizierten Metallpartikel in Beschichtungen

Die modifizierten Zinklamellen werden in wässrigen Beschichtungszusammensetzungen als auch in lösemittelbasierten Beschichtungszusammensetzungen getestet.

### 3.1. Wässrige Systeme

Die nachfolgend in Tabelle 3 angegebene Beschichtungszusammensetzung, welche Wasser als Dispersionsmittel enthält, wird zum einen mit erfindungsgemäß modifizierten Zinklamellen und zum anderen mit Standardzinklamellen, welche mit Stearinsäure gecoatet sind, hergestellt.

**Tabelle 3: Antikorrosive Beschichtungszusammensetzung**

| **Komponente** | **Funktion** | **Anteil [Gew.-%]** |
|---|---|---|
| Dipropylenglykol | Dispersionsmittel | 5,3 |
| Isotridecanol, ethoxyliert | Dispersionsmittel | 4,0 |
| 1-Nitropropan | Dispersionsmittel | 0,75 |
| Wasser | Dispersionsmittel | 29,64 |
| Epoxy-Silan-Oligomer | Bindemittel | 10,0 |
| Natronwasserglas | Bindemittel | 0,1 |
| Zinkflake | Metallpartikel | 45,10 |
| ortho-Phosphorsäure | Korrosionsschutzadditiv | 0,50 |
| Natriumdioctylsulfosuccinat | Netzmittel | 0,50 |
| Polyethersiloxan-Copolymer | Entschäumer | 0,50 |
| Xanthan-Gum | Verdicker | 3,55 |

Die die modifizierten Metallpartikel enthaltende Beschichtungszusammensetzung als auch die Zinklamellen enthaltenden Beschichtungszusammensetzung werden mittels Rakeln auf Stahlbleche aufgebracht und anschließend ausgehärtet, so dass Beschichtungen mit einer Schichtdicke von 6 bis 9 µm erhalten werden.

Die Stahlbleche werden anschließend einem Salzsprühtest am Ritz nach DIN EN ISO 9227 unterzogen.

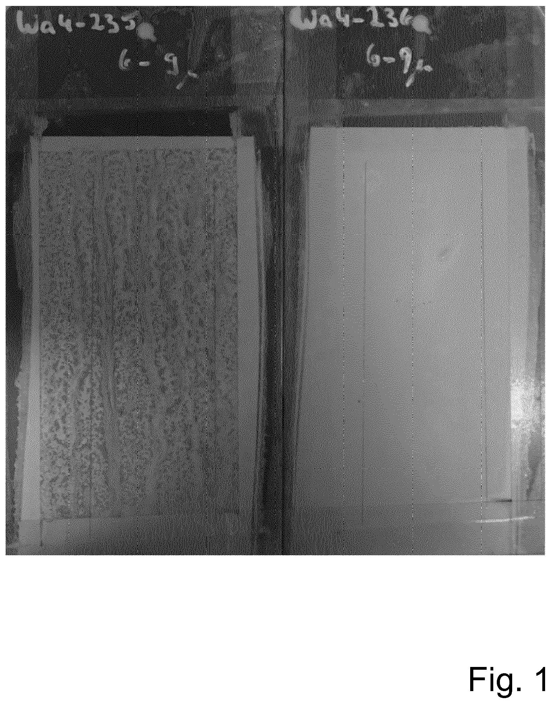

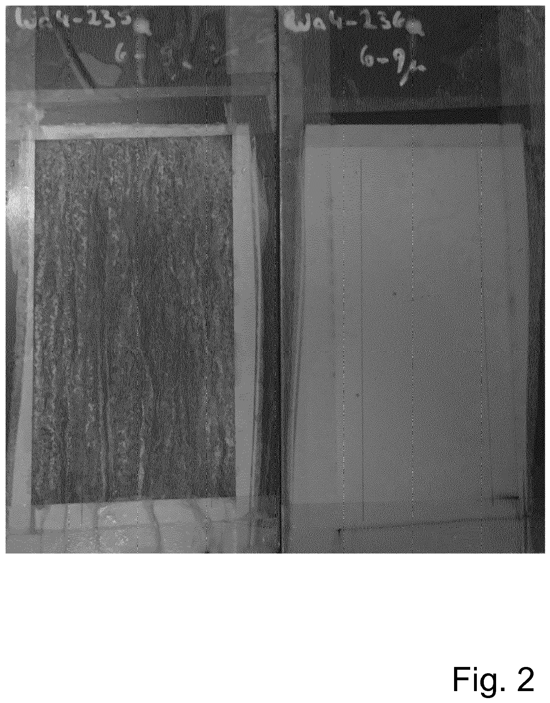

Nach 24 Stunden sowie nach 7 Tagen werden jeweils die mit der erfindungsgemäßen Beschichtungszusammensetzung sowie die der Vergleichsbeschichtungszusammensetzung beschichteten Metallbleche beurteilt und verglichen. Die Ergebnisse sind in den Figuren 1 und 2 dargestellt.

Es zeigt Fig. 1 einen Vergleich zwischen dem mit der erfindungsgemäßen Beschichtungszusammensetzung beschichteten Stahlblech auf der rechten Seite und einem mit der Vergleichsbeschichtungszusammensetzung beschichteten Stahlblech auf der linken Seite nach 24 Stunden im Salzsprühtest. Während das mit der erfindungsgemäßen Korrosionsschutzbeschichtung beschichtete Stahlblech keinerlei Anzeichen von Rot- oder Weißrost aufweist, zeigen sich an der Vergleichsbeschichtung bereits erste Anzeichen von Weißrost, welcher sich in großen Flecken auf der Beschichtung äußert. Rotrost wird hingegen auch an dem mit der Vergleichsbeschichtung beschichteten Stahlblech nicht gefunden.

Fig. 2 zeigt auf der rechten Seite das mit der erfindungsgemäßen Korrosionsschutzbeschichtung versehene Stahlblech nach 7 Tagen im Salzsprühtest, während das linke Stahlblech mit der Vergleichsbeschichtung beschichtet ist. Während das mit der erfindungsgemäßen Beschichtungszusammensetzung versehene Substrat weder Anzeichen von Rotrost noch Weißrost aufweist, ist das mit der Vergleichszusammensetzung beschichtete Substrat schon merklich angegriffen und zeigt eine deutliche Weißrostentwicklung an der Beschichtung, wobei jedoch kein Rotrost an dem Stahlblech zu erkennen ist.

Es zeigt sich, dass mit der erfindungsgemäßen Modifizierung der Zelllamellen die Weißrostbeständigkeit der Zinklamellen in wässrig basierten Beschichtungssystemen deutlich verbessert werden kann, insbesondere weisen die getesteten Beschichtungen nach 7 Tagen im Salzsprühtest immer noch eine optisch ansprechende Metallfarbe auf, während die Beschichtung mit den herkömmlichen Zinkflakes bereits dunkelgrau und fleckig angelaufen ist sowie eine deutliche Weißrostentwicklungen zeigt. Wie sich an den Beispielen gleichfalls ersehen lässt, ist die bessere Korrosionsbeständigkeit der Zinklamellen gegenüber Weißrost nicht durch einen Verlust des kathodischen Korrosionsschutzes erkauft, da das mit der erfindungsgemäßen Beschichtungszusammensetzung beschichtete Substrat am Ritz keinerlei an Rotrost zeigt.

### 3.2. Lösemittebasierte Systeme

Auf entfettete Stahlblech werden die in den Tabellen 4 bis 7 beschriebenen lösemittelhaltigen Beschichtungszusammensetzungen durch Tauchen aufgebracht und bei 200 °C 30 Minuten im Ofen ausgehärtet. Es resultieren Beschichtungen mit Schichtdicken von 10 µm.

Die mit a indizierten Beispiele beziehen sich auf herkömmliche Zinkpigmente (Vergleich), die mit b indizierten Beispiele auf erfindungsgemäß nach der Stöber-Synthese beschichtete Pigmente , wobei die Hülle eine Schichtdicke von ca. 30nm aufweist.

Die Weißrostbeständigung und die Rotrostbeständigkeit im neutralen Salzsprühtest wurden wie folgt bewertet:
(a) Rotrostbeständigkeit:
   +++ das Substrat zeigt noch über 1000 Stunden im Salzsprühtest weder an der Fläche noch am Ritz Anzeichen von Rotrost
   ++ das Substrat zeigt am Ritz leichte Rotrostbildung
   + deutlichere Rotrostbildung am Ritz sowie erste Rotrostbildung in der Fläche
   +/- deutliche Rotrostbildung am Ritz sowie leichte Rotrostbildung an der Fläche
   - sowohl in der Fläche als am Ritz deutliche Rotrostbildung
(b) Weißrostbeständigkeit:
   +++ nach über 1000 Stunden im neutralen Salzsprühtest zeigt die Beschichtung keinerlei Anzeichen von Weißrostbildung
   ++ leichte Weißrostbildung der Beschichtung erkennbar an fleckiger Verfärbung
   x stärkere Weißrostbildung in der Beschichtung
   +/- deutliche großflächige Weißrostbildung in der Beschichtung
   - starke und durchgängige Weißrostbildung

Bei den durchgeführten Untersuchungen zeigt sich, dass die besten Ergebnisse mit modifizierten Zinkaluminiumlamellen erhalten werden können, wobei auch reine Zinklamellen sowie Zinkstaub im Vergleich zu unmodifizierten Zinkpartikeln eine deutlich verbesserte Weißrostbeständigkeit zeigen. Überraschenderweise zeigt sich für alle modifizierten Zinkpartikel, dass auch die Rotrostbeständigkeit der Beschichtungen gegenüber Beschichtungen mit unmodifizierten Zinkpartikeln deutlich verbessert ist. Durch den Einsatz der modifizierten Pigmente in Korrosionsschutzbeschichtungen wird somit nicht nur die Weißrostbeständigkeit der Beschichtungen deutlich erhöht, sondern auch die Rotrostbeständigkeit des Substrats.

**Tabelle 4: Vergleich lösemittelbasierter Beschichtungen mit Zinklammellen**

| | **Beispiel 1a** (Vergleich) | **Beispiel 1b** |
|---|---|---|
| Komponente | Menge [g] | Menge [g] |
| Titanat (Tyzor TOT / Dorf Ketal) | 465 | 465 |
| Titanat (Tyzor BTP / Dorf Ketal) | 110 | 110 |
| Bis-phenol A-ethylene-oxide-diol (MACOL 98B / BASF) | 155 | 155 |
| Rheologieadditiv (BYK 410/ BYK) | 50 | 50 |
| Zinklamelle (Stapa Zn 8 / Eckart) | 9100 | 9150 |
| Ethyl Cellulose N-200 (Hercules Co.) | 120 | 120 |
| Lösemittelgemisch (24% Benzylalkohol, 23% Toluol, 24% Methylisobutylketon, 24% Solvesso 100, 5% n-Butanol) | 1200 | 1200 |
| Rotrost-Beständigkeit im neutralen SST >1000h | + | ++ |
| Bewertung am 0.5mm Ritz bei 10 µm Schichtdicke | | |
| Weißrost-Beständigkeit auf der Fläche bei 10µm Schichtdicke | +/- | +++ |

**Tabelle 5: Vergleich lösemittelbasierter Beschichtungen mit Zinklammellen**

| | **Beispiel 2a** (Vergleich) | **Beispiel 2b** (erfindungsgemäß) |
|---|---|---|
| Komponente | Menge [g] | Menge [g] |
| Titanat (Tyzor TOT / Dorf Ketal) | 60 | 60 |
| Bis-phenol A-ethylene-oxide-diol (MACOL 98B / BASF) | 3 | 3 |
| Rheologieadditiv (BYK 410/ BYK) | - | - |
| Zinklamelle (Stapa Zn 8 / Eckart) | 180 | 185 |
| Ethyl Cellulose N-200 (Hercules Co.) | 2,5 | 2,5 |
| Lösemittelgemisch (24% Benzylalkohol, 23% Toluol, 24% Methylisobutylketon, 24% Solvesso 100, 5% n-Butanol) | 85 | 85 |
| Rotrost-Beständigkeit im neutralen SST >1000h | + | ++ |
| Bewertung am 0,5 mm Ritz bei 10 µm Schichtdicke | | |
| Weißrost-Beständigkeit auf der Fläche bei 10µm Schichtdicke | +/- | +++ |

**Tabelle 6: Vergleich lösemittelbasierter Beschichtungen mit ZinkAluminiumimenten**

| | **Beispiel 3a** (Vergleich) | **Beispiel 3b** (erfindungsgemäß) |
|---|---|---|
| Komponente | Menge [g] | Menge [g] |
| Titanat (Tyzor TOT / Dorf Ketal) | 65 | 65 |
| Bis-phenol A-ethylene-oxide-diol (MACOL 98B / BASF) | 3 | 3 |
| Rheologieadditiv (M-P-A 4020 X / Elementis Specialties) | 2 | 2 |
| Zinkaluminiumlamelle (Stapa 4ZnAl7 /Eckart) | 150 | 152 |
| Ethyl Cellulose N-200 (Hercules Co.) | 2 | 2 |
| Lösemittelgemisch (24% Benzylalkohol, 23% Toluol, 24% Methylisobutylketon, 24% Solvesso 100, 5% n-Butanol) | 70 | 70 |
| Rotrost-Beständigkeit im neutralen SST >1000h | + | ++ |
| Bewertung am 0,5 mm Ritz bei 10 µm Schichtdicke | | |
| Weißrost-Beständigkeit auf der Fläche bei 10µm Schichtdicke | + | +++ |

**Tabelle 7: Vergleich lösemittelbasierter Beschichtungen mit Zinkstaub**

| | **Beispiel 4a** (Vergleich) | **Beispiel 4b** (erfindungsgemäß) |
|---|---|---|
| Komponente | Menge [g] | Menge [g] |
| Titanat (Tyzor TOT / Dorf Ketal) | 65 | 65 |
| Bis-phenol A-ethylene-oxide-diol (MACOL 98B / BASF) | 3 | 3 |
| Rheologieadditiv (M-P-A 4020 X / Elementis Specialties) | 2 | 2 |
| Zinkstaub (Superfinde 620 / Conmet) | 170 | 175 |
| Ethyl Cellulose N-200 (Hercules Co.) | 2 | 2 |
| Lösemittelgemisch (24% Benzylalkohol, 23% Toluol, 24% Methylisobutylketon, 24% Solvesso 100, 5% n-Butanol) | 70 | 70 |
| Rotrost-Beständigkeit im neutralen SST >1000h | +/- | + |
| Bewertung am 0,5 mm Ritz bei 10 µm Schichtdicke | | |
| Weißrost-Beständigkeit auf der Fläche bei 10µm Schichtdicke | - | ++ |

## Patentansprüche

1. Antikorrosive Beschichtungszusammensetzung, enthaltend oberflächenmodifizierte Metallpartikel in Mengen von 30 bis 70 Gew.-%, bezogen auf die Beschichtungszusammensetzung, wobei die Metallpartikel auf Basis reinen Zinks und/oder von Zinklegierungen ausgebildet sind und an ihrer Oberfläche eine anorganisch basierte Modifizierung in Form einer Beschichtung aufweisen, wobei die Modifizierung durch Oxide des Siliciums, Titans und/oder Zirkoniums gebildet wird.

2. Antikorrosive Beschichtungszusammensetzung nach Anspruch 1, **dadurch gekennzeichnet, dass** die Beschichtungszusammensetzung die Metallpartikel in Mengen von 40 bis 60 Gew.-% bezogen auf die Beschichtungszusammensetzung, enthält.

3. Antikorrosive Beschichtungszusammensetzung nach Anspruch 1 oder 2, **dadurch gekennzeichnet, dass** die Modifizierung eine Schichtdicke im Bereich von 3 bis 150 nm, insbesondere 5 bis 120 nm, vorzugsweise 8 bis 100 nm, bevorzugt 10 bis 80 nm, besonders bevorzugt 10 bis 80 nm, aufweist.

4. Antikorrosive Beschichtungszusammensetzung nach einem der vorangehenden Ansprüche, **dadurch gekennzeichnet, dass** die Metallpartikel Partikelgrößen im Bereich von 0,1 µm bis 30 µm, insbesondere 0,5 µm bis 20 µm, vorzugsweise 1 µm bis 15 µm, aufweisen und/oder dass die Metallpartikel plättchenförmige und/oder kornförmige, insbesondere sphärische, Metallpartikel sind.

5. Antikorrosive Beschichtungszusammensetzung nach einem der vorangehenden Ansprüche, **dadurch gekennzeichnet, dass** die Zinklegierungen ausgewählt sind aus Zink-Bismut-Legierungen, Zink-Aluminium-Legierungen und/oder Zink-Aluminium-Magnesium-Legierungen, insbesondere Zink-Aluminium-Legierungen und/oder Zink-Aluminium-Magnesium-Legierungen, vorzugsweise Zink-Aluminium-Magnesium-Legierungen sind.

6. Antikorrosive Beschichtungszusammensetzung nach einem der vorangehenden Ansprüche, **dadurch gekennzeichnet, dass** die Modifizierung durch Siliciumdioxid und/oder Titandioxid, bevorzugt durch Siliciumdioxid, gebildet wird.

7. Verwendung einer antikorrosiven Beschichtungszusammensetzung nach einem der Ansprüche 1 bis 6 zur Herstellung einer Korrosionsschutzbeschichtung.

8. Korrosionsschutzbeschichtung, erhältlich aus einer antikorrosiven Beschichtungszusammensetzung nach einem der Ansprüche 1 bis 6.

9. Verwendung von Metallpartikeln, wobei die Metallpartikel auf Basis reinen Zinks und/oder von Zinklegierungen ausgebildet sind und an ihrer Oberfläche eine anorganisch basierte Modifizierung in Form einer Beschichtung aufweisen, wobei die Modifizierung durch Oxide des Siliciums, Titans und/oder Zirkoniums gebildet wird, als Korrosionsschutzpigmente zur Herstellung von kathodischen Korrosionsschutzbeschichtungen und kathodischen antikorrosiven Beschichtungszusammensetzungen.

## Claims

1. Anti-corrosive coating composition comprising surface-modified metal particles in quantities of 30 to 70 wt.%, based on the coating composition, wherein the metal particles are based on pure zinc and/or zinc alloys and have an inorganically based modification on their surface in the form of a coating, wherein the modification is formed by oxides of silicon, titanium and/or zirconium.

2. Anti-corrosive coating composition according to claim 1, **characterized in that** the coating composition contains the metal particles in amounts of 40 to 60% by weight based on the coating composition.

3. Anti-corrosive coating composition according to claim 1 or 2, **characterized in that** the modification has a layer thickness in the range from 3 to 150 nm, in particular 5 to 120 nm, preferably 8 to 100 nm, more preferably 10 to 80 nm, in particular preferably 10 to 80 nm.

4. Anti-corrosive coating composition according to one of the preceding claims, **characterized in that** the metal particles have particle sizes in the range of 0.1 µm to 30 µm, in particular 0.5 µm to 20 µm, preferably 1 µm to 15 µm, and/or that the metal particles are platelet-shaped and/or grain-shaped, in particular spherical, metal particles.

5. Anti-corrosive coating composition according to one of the preceding claims, **characterized in that** the zinc alloys are selected from zinc-bismuth alloys, zinc-aluminium alloys and/or zinc-aluminium-magnesium alloys, in particular zinc-aluminium alloys and/or zinc-aluminium-magnesium alloys, preferably zinc-aluminium-magnesium alloys.

6. Anti-corrosive coating composition according to one of the preceding claims, **characterized in that** the modification is formed by silica and/or titanium dioxide, preferably by silica.

7. Use of an anti-corrosive coating composition according to any of the claims 1 to 6 for the production of an anti-corrosive coating.

8. Anti-corrosive coating obtainable from an anti-corrosive coating composition according to any of claims 1 to 6.

9. Use of metal particles, wherein the metal particles are based on pure zinc and/or zinc alloys and comprise on their surface an inorganically based modification in the form of a coating, wherein the modification is formed by oxides of silicon, titanium and/or zirconium, as corrosion protection pigments for the production of cathodic anti-corrosive coatings and cathodic anti-corrosive coating compositions.

## Revendications

1. Composition de revêtement anticorrosion comprenant des particules métalliques modifiées en surface dans des quantités de 30 à 70 % en poids, rapporté à la composition de revêtement, les particules métalliques étant formées à base de zinc pur et/ou d'alliages de zinc et comprenant sur leur surface une modification à base inorganique sous la forme d'un revêtement, ladite modification étant formée à l'aide des oxydes de silicium, de titane et/ou de zirconium.

2. Composition de revêtement anticorrosion selon la revendication 1, **caractérisée en ce que** ladite composition de revêtement comprend les particules métalliques dans des quantités de 40 à 60 % en poids, rapporté à la composition de revêtement.

3. Composition de revêtement anticorrosion selon la revendication 1 ou 2, **caractérisée en ce que** la modification comporte une épaisseur de couche dans la plage de 3 à 150 nm, en particulier de 5 à 120 nm, de préférence de 8 à 100 nm, de manière préférée de 10 à 80 nm, de manière particulièrement préférée de 10 à 80 nm.

4. Composition de revêtement anticorrosion selon l'une quelconque des revendications précédentes, **caractérisée en ce que** les particules métalliques comportent des tailles de particules dans la plage de 0,1 µm à 30 µm, en particulier de 0,5 µm à 20 µm, de préférence de 1 µm à 15 µm et/ou que les particules métalliques sont des particules métalliques sous la forme de plaquettes et/ou granulaires, en particulier sphériques.

5. Composition de revêtement anticorrosion selon l'une quelconque des revendications précédentes, **caractérisée en ce que** les alliages de zinc sont choisis parmi les alliages zinc-bismuth, les alliages zinc-aluminium et/ou les alliages zinc-aluminium-magnésium, en particulier les alliages zinc-aluminium et/ou le alliages zinc-aluminium-magnésium, de préférence les alliages zinc-aluminium-magnésium.

6. Composition de revêtement anticorrosion selon l'une quelconque des revendications précédentes, **caractérisée en ce que** la modification est formée par le dioxyde de silicium et/ou le dioxyde de titane, de préférence le dioxyde de silicium.

7. Utilisation d'une composition de revêtement anticorrosion selon l'une quelconque des revendications 1 à 6, destinée à la fabrication d'un revêtement de protection contre la corrosion.

8. Revêtement de protection contre la corrosion, pouvant être obtenu à partir d'une composition de revêtement anticorrosion selon l'une quelconque des revendications 1 à 6.

9. Utilisation de particules métalliques, les particules métalliques étant formées à base de zinc pur et/ou d'alliages de zinc et comprenant sur leur surface une modification à base inorganique sous la forme d'un revêtement, la modification étant formée à l'aide des oxydes de silicium, de titane et/ou de zirconium, en tant que pigments anticorrosion destinés à la fabrication de revêtements de protection cathodique contre la corrosion et de compositions de revêtements anticorrosion cathodiques.
